# EUROPÄISCHE PATENTSCHRIFT

(11) **EP 0 422 394 B1**
(45) Veröffentlichungstag und Bekanntmachung des Hinweises auf die Patenterteilung: **15.12.1993**
(21) Anmeldenummer: 90117385.6
(22) Anmeldetag: 10.09.1990
(51) Int. Cl.: B30B 9/24, B01D 33/052

(54) **Presspassiermaschine**
Strainer press
Presse à bande filtrante

(30) Priorität: 12.10.1989 DE 3934087
(43) Veröffentlichungstag der Anmeldung: 17.04.1991
(73) Patentinhaber: NORDISCHER MASCHINENBAU RUD. BAADER GMBH + CO KG, 23560 Lübeck (DE)
(72) Erfinder: Kunig, Helmut, D-2407 Bad Schwartau (DE)

(56) Entgegenhaltungen:
- EP-A- 0 203 637
- DE-A- 2 405 854
- DE-B- 2 159 465
- DE-C- 285 594
- FR-A- 1 340 431
- US-A- 3 104 608
- US-A- 3 734 000

## Beschreibung

Die Erfindung geht aus von einer Preßband-Passiermaschine zum Trennen von miteinander vermischten nicht fließfähigen und fließfähigen Bestandteilen, wie Sehnen und Knorpeln von Fleischteilen, umfassend eine umlaufend angetriebene Lochtrommel mit perforierter Mantelfläche, ein die Lochtrommel auf einem Teil ihres Umfanges umschlingendes, durch eine Druckwalze und durch dieser vorgeordnete Spann- und Anpreßmittel an die Mantelfläche anpreßbares, elastisches Preßband, welches zwischen zwei Seitenwänden geführt ist und mit der Mantelfläche der Lochtrommel einen Einzugskeil für das Passiergut bildet, dessen seitliche Begrenzung durch die Seitenwände erfolgt.

Aus der DE-AS 2 159 465 ist eine Preßband-Passiermaschine bekannt, bei der vor der Druckwalze das Preßband im Bereich der Randzonen abstützende Bandandrücker angeordnet sind, die u. a. die Aufgabe haben, das Entstehen von seitlichem Leckfluß zu unterbinden. Diese sind kufenförmig ausgestaltet und um eine gestellfeste Achse in der Nähe der Druckwalze frei schwenkbar, wobei diese Achse eine Sperrwalze trägt, die wie die Bandandrücker mit dem Preßband in Kontakt tritt. Damit ist zwar der erwähnte nachteilige Leckfluß weitgehend unterbunden, doch zeigen sich an diesem Konzept andere Probleme. So kommt es vor, daß das Preßband bei Aufgabe grobstückigen Verarbeitungsgutes im Mittenbereich soweit verformt wird, daß es von den Bandandrückern abgleitet, was zur spontanen Zerstörung des Preßbandes und Gefährdung der Gesamteinrichtung führt. Darüberhinaus ergibt sich aufgrund der Gleitreibung zwischen den Stützflächen der Bandandrücker und dem Preßband auch im Normalbetrieb eine Beanspruchung dieser Teile, die das Preßband und die Bandandrücker nicht zuletzt auch aufgrund des damit verbundenen thermischen Einflusses vorzeitig zerstört.

Aus der DE-PS 285 594 ist weiter eine Walzenpresse zum Gewinnen von Oleo und Stearin aus geschmolzenem Talg zu entnehmen, bei der ein umlaufendes durchlässiges Preßtuch durch eine Reihe von federnd gelagerten, mit konkaven Mantelflächen versehene Walzen gestützt wird, und welchem Preßtuch ein über eine Reihe von festgelagerten Walzen laufendes Stahlband gegenübersteht. Der Grad der Auskehlung wird von Walze zu Walze geringer bis zur zylindrischen Gestalt der letzten Walze. Ein solches Konzept ist für den hier vorgesehenen Anwendungsfall gänzlich ungeeignet.

Es ist die Aufgabe der Erfindung, den Einsatzbereich der Preßband-Passiermaschine zu erweitern und die Lebensdauer des Preßbandes zu verbessern.

Diese Aufgabe wird erfindungsgemäß dadurch gelöst, daß das Anpreßmittel ein an sich bekannter Anpreßschuh ist und mit einstellbarer Kraft im wesentlichen radial zur Lochtrommel elastisch an diese anpreßbar ist und über die gesamte Bandbreite reicht, und eine Oberflächenform aufweist, die eine starke Auswölbung des Preßbandes in Preßbandmitte am Anfang des Anpreßschuhs zuläßt, während diese Möglichkeit der Auswölbung in Richtung auf das Ende des Anpreßschuhs kontinuierlich abnimmt.

Die damit erzielbaren Vorteile bestehen insbesondere darin, daß die auf das Preßband einwirkenden örtlichen Verformungs- und Reibungskräfte begrenzt werden.

Nach einer ersten Ausführungsform können die Anpreßmittel als Walzenrost ausgebildet sein und die im Anspruch 1 angegebene Oberflächenform dadurch erreicht werden, daß die diesen bildenden Stützwalzen in ihrem Mittenbereich eine Zone geringeren Durchmessers aufweisen, wobei die Länge dieser Zone bei den einzelnen Stützwalzen unterschiedlich ist, in der Weise, daß sie mit zunehmender Nähe der Stützwalzen zur Druckwalze hin geringer wird und schließlich die letzte Stützwalze eine Zylinderwalze ist.

Gemäß einer weiteren Ausführungsform kann der Anpreßschuh als Blechformteil oder aus Kunststoff im Gieß-, Zieh-, Preß- oder Freiformverfahren hergestellt sein. Dabei kommt der Lebensdauer des Preßbandes besonders zugute, wenn die Anpreßmittel im wesentlichen senkrecht zu dem Preßband oszillierend bewegbar sind, wobei die Oszillationsbewegung durch federnde Abstützung der Anpreßmittel auf mindestens einer Exzenterwalze erfolgt, deren Antrieb von dem Maschinenantrieb abgeleitet wird.

Die Erfindung wird nachstehend anhand eines in der Zeichnung dargestellten Ausführungsbeispieles näher erläutert. Es zeigt
- Fig. 1: eine Seitenansicht einer Preßband-Passiermaschine in Teilansicht, vereinfacht dargestellt,
- Fig. 2: eine entsprechende Ansicht mit anderen Mitteln zum Stützen,
- Fig. 3: einen Querschnitt durch die Einrichtung nach Fig. 1 längs der Schnittlinie I - I ,
- Fig. 4: einen Querschnitt durch die Einrichtung nach Fig. 1 längs der Schnittlinie II - II ,
- Fig. 5: einen Querschnitt durch die Einrichtung nach Fig. 2 längs der Schnittlinie III - III ,
- Fig. 6: eine axonometrische Darstellung des flächigen Stützelementes der Ausführung nach Fig. 1 .

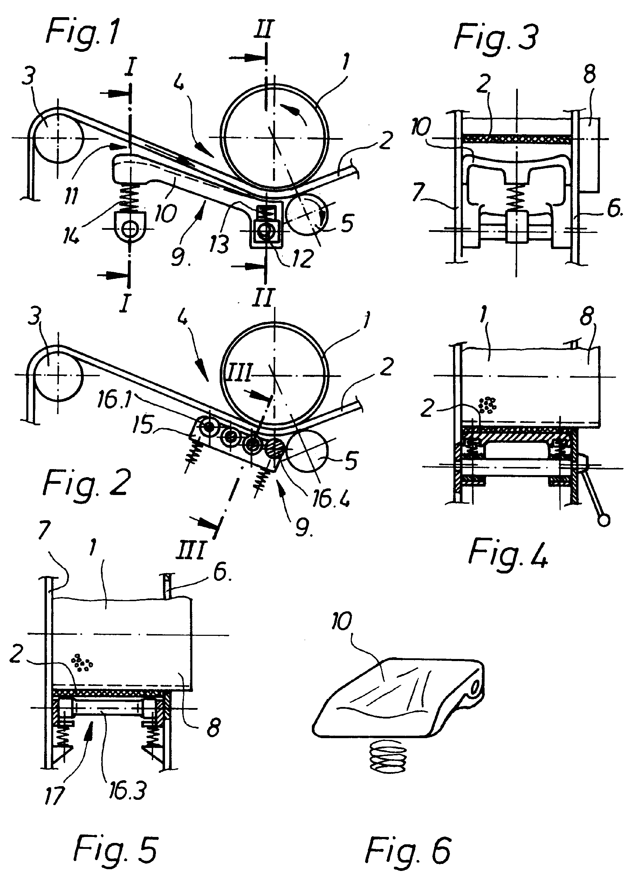

Die erfindungsgemäße Einrichtung ist Bestandteil einer Passiermaschine, die in den Figuren 1 und 2 in Teilansicht vereinfacht dargestellt ist. Eine umlaufend angetriebene Lochtrommel 1 mit perforierter Mantelfläche wird auf einem Teil ihres Umfanges von einem endlosen Preßband 2 umschlungen und durch nur z. T. gezeigte Umlenkwalzen 3 unter Bildung eines Einzugskeiles 4 zwischen Preßband 2 und Lochtrommel 1 geführt. Das Ende der Umschlingung wird durch eine Druckwalze 5 bestimmt, die radial zu der Lochtrommel 1 einstellbar ist und damit das Preßband 2 gegen die Mantelfläche der Lochtrommel 1 anzupressen vermag. Das Preßband 2 bewegt sich zwischen zwei Seitenwänden 6 und 7 , die den Einzugskeil 4 seitlich begrenzen und durch deren eine 6 die Lochtrommel 1 mit einem Schaftteil 8 hindurchragt.

Im Bereich des Einzugskeiles 4 befinden sich Anpreßmittel 9 zum Stützen der Innenseite des Preßbandes. Wie aus den Figuren 1 und 3 ersichtlich, bestehen diese aus einem Anpreßschuh 10 , der, wie aus Fig. 6 hervorgeht, im Bereich des Einzugskeiles 4 sattelförmig profiliert ist und dessen Breite, wie aus Figuren 3 und 4 ersichtlich, der des Preßbandes 2 entspricht. Die sattelförmige Profilierung wird durch eine konkave Ausnehmung des Mittelteils der dem Preßband 2 zugekehrten Fläche erzeugt, wobei diese Ausnehmung zu der Lochtrommel 1 hin stetig abnimmt und schließlich im Endbereich in eine zu der Mantelfläche der Lochtrommel 1 äquidistante Fläche übergeht. Der Andrückschuh 10 bildet mit der Innenseite des Preßbandes 2 einen sich gegen dessen Umlaufrichtung öffnenden Keil 11 , der kurz vor der Druckwalze 5 beiläuft und den Anpreßschuh 10 in diesem Bereich annähernd an dem Preßband 2 zur Anlage bringt, welche Stellung durch nicht gezeigte Anschläge begrenzt wird. Die Stützung des Anpreßschuhs 10 erfolgt dabei im Bereich seines der Druckwalze 5 zuweisenden Endes durch eine Exzenterwalze 12 , auf der sich der Anpreßschuh 10 über eine Druckfeder 13 abstützt. Durch Verdrehen der Exzenterwalze 12 kann die Kraft der Druckfeder 13 beeinflußt werden. Das andere Ende des Anpreßschuhs 10 ruht ebenfalls auf einer Druckfeder 14 , die den Anpreßschuh 10 auch in diesem Bereich federnd verdrängbar stützt.

In dem in Figuren 2 und 5 dargestellten Ausführungsbeispiel ist der Anpreßschuh 10 durch einen Walzenrost 15 ersetzt, dessen Abstützung wie die des Anpreßschuhs erfolgt. Der Walzenrost 15 besteht aus einer Anzahl frei drehbarer Stützwalzen 16.1 bis 16.4 , die in ihrem Mittenbereich eine sich symmetrisch zur Mitte des Walzenkörpers erstreckende abgesetzte Zone 17 aufweisen. Dabei ist das Maß dieser Zone 17 bei den einzelnen Stützwalzen 16.1 bis 16.4 unterschiedlich und zwar in der Weise, daß dieses Maß mit zunehmender Nähe zu der Druckwalze 5 hin geringer ausgeführt und schließlich die letzte Stützwalze 16.4 als Zylinderwalze ausgebildet ist.

Im Betrieb der Einrichtung wird die Lochtrommel 1 gegen den Uhrzeigersinn angetrieben und damit in den Einzugskeil 4 eingebrachtes Verarbeitungsgut zwischen Preßband 2 und Lochtrommel 1 eingezogen und einer zunehmenden Pressung unterworfen, die im Bereich der Druckwalze 5 ihr Maximum erreicht. Dabei fließen die fließfähigen Bestandteile durch die Perforationen in der Mantelfläche der Lochtrommel 1 in das Innere derselben ab und können durch eine nicht gezeigte Austragschnecke entnommen werden. Während des Einzuges des stückigen Verarbeitungsgutes erfolgt eine von der Größe und Härte der einzelnen Stücke abhängige Ausbeulung des Preßbandes 2 , die erwünscht ist, da sie die Einzugsfähigkeit der Einrichtung verbessert. Dieser Ausbeulung wirkt zunächst lediglich ein aus der Spannung des Preßbandes 2 resultierender Biegewiderstand desselben entgegen. Ab einer bestimmten Ausbeulung tritt die Innenseite des Preßbandes 2 jedoch mit den Anpreßmitteln 9 in Kontakt, so daß die Ausbeulung auf ein Maß begrenzt wird, das die damit einhergehende Minderung der Breite des Preßbandes 2 auf ein vorbestimmtes Maß einschränkt. Durch die Formgebung und Anordnung der Anpreßmittel 9 wird dabei erreicht, daß das Preßband 2 im Bereich der Randzonen die geringste, in der Mitte die größte Ausweichmöglichkeit aufweist, welcher Unterschied sich mit zunehmender Nähe zur Lochtrommel 1 verliert, so daß das Preßband 2 im Umschlingungsbereich der Lochtrommel 1 ebenflächig gestützt wird. Bei Überschreiten einer bestimmten, auf das Preßband 2 einwirkenden Anhebekraft kann der Anpreßschuh 10 gegen die Druckfedern 13 und 14 ausweichen, wobei mindestens die Kraft der Feder 13 durch Drehen der Exzenterwelle 12 beeinflußt werden kann.

Die zwischen Preßband 2 und Anpreßschuh 10 auftretenden Reibkräfte können entscheidend reduziert werden, wenn die Exzenterwelle 12 im Uhrzeigersinn angetrieben umläuft. Dabei wird der Exzenterhub zweckmäßigerweise so aufgeteilt, daß ein Teil in der Veränderung der Vorspannung der Druckfeder 13 , und der Rest in einen Oszillationshub des Anpreßschuhs 10 umgesetzt wird. Es wird dadurch ein rhythmischer Preßdruck auf das Verarbeitungsgut ausgeübt, der in der Abbauphase von einer Begleitbewegung des Anpreßschuhs 10 überlagert wird. Die Umlaufgeschwindigkeit der Exzenterrwelle 12 kann zur Optimierung dieses Effektes so gewählt werden, daß der Mittelwert des in Laufrichtung des Preßbandes weisenden Geschwindigkeitsvektors dem des Preßbandes 2 im wesentlichen entspricht.

In gleicher Weise kann auch der andere Stützpunkt des Anpreßschuhs 10 ausgebildet, d. h. eine Exzenterwelle vorgesehen sein, auf der sich die Druckfeder 14 abstützt. Die beiden Exzenterwellen werden dann synchron umlaufend angetrieben.

Für die Ausbildung der Einrichtung gemäß Fig. 2 gilt sinngemäß dasselbe.

## Patentansprüche

1. Preßband-Passiermaschine zum Trennen von miteinander vermischten nicht fließfähigen und fließfähigen Bestandteilen, wie Sehnen und Knorpeln von Fleischteilen, umfassend eine umlaufend angetriebene Lochtrommel (1) mit perforierter Mantelfläche, ein die Lochtrommel (1) auf einem Teil ihres Umfanges umschlingendes, durch eine Druckwalze (5) und durch dieser vorgeordnete Spann- und Anpreßmittel (9) an die Mantelfläche anpreßbares, elastisches Preßband (2), welches zwischen zwei Seitenwänden (6, 7) geführt ist und mit der Mantelfläche der Lochtrommel (1) einen Einzugskeil (4) für das Passiergut bildet, dessen seitliche Begrenzung durch die Seitenwände (6, 7) erfolgt, **dadurch** **gekennzeichnet,** daß das Anpreßmittel (9) mit einstellbarer Kraft im wesentlichen radial zur Lochtrommel (1) elastisch an diese anpreßbar ist und über die gesamte Bandbreite reicht und eine Oberflächenform aufweist, die eine starke Auswölbung des Preßbandes (2) in Preßbandmitte am Anfang des Anpreßmittels (9) zuläßt, während diese Möglichkeit der Auswölbung in Richtung auf das Ende des Anpreßmittels (9) kontinuierlich abnimmt.

2. Preßpassiermaschine nach Anspruch 1 , **dadurch gekennzeichnet,** daß das Anpreßmittel (9) ein an sich bekannter Anspreßschuh (10) ist.

3. Preßpassiermaschine nach Anspruch 1 , **da****durch gekennzeichnet**, daß das Anpreßmittel (9) als Walzenrost (15) ausgebildet ist und die im Anspruch 1 angegebene Oberflächenform dadurch erreicht wird, daß die diesen bildenden Stützwalzen (16) in ihrem Mittenbereich eine Zone (17) geringeren Durchmessers aufweisen, wobei die Länge dieser Zone (17) bei den einzelnen Stützwalzen (16) unterschiedlich ist, in der Weise, daß sie mit zunehmender Nähe der Stützwalzen (16) zur Druckwalze (5) hin geringer wird und schließlich die letzte Stützwalze (16.4) eine Zylinderwalze ist.

4. Preßpassiermaschine nach Anspruch 2 , **dadurch gekennzeichnet,** daß der Anpreßschuh (10) als Blechformteil ausgeführt ist.

5. Preßpassiermaschine nach Anspruch 2 , **dadurch gekennzeichnet,** daß der Anpreßschuh (10) aus Kunststoff im Gieß-, Zieh-, Preß- oder Freiformverfahren hergestellt ist.

6. Preßpassiermaschine nach einem der Ansprüche 1 bis 5 , **dadurch gekennzeichnet,** daß die Anpreßmittel (9) im wesentlichen senkrecht zu dem Preßband (2) oszillierend bewegbar sind, wobei die Oszillationsbewegung durch federnde Abstützung der Anpreßmittel (9) auf mindestens einer Exzenterwalze (12) erfolgt, deren Antrieb von dem Maschinenantrieb abgeleitet wird.

## Claims

1. Press belt sieving machine for the separation of intermixed non-flowable and flowable components, such as ligaments and gristle, from flesh parts, comprising a rotationally driven apertured drum (1) with a perforated shell surface, an elastic press belt (2), which loops around the apertured drum (1) over a part of its circumference, is pressable against the shell surface by a pressure roller (5) and by stressing and pressing-on means (9) arranged in front thereof, is guided between two side walls (6, 7) and forms with the shell surface of the apertured drum (1) an intake V (4) for the stock to be sieved, the lateral boundary of which is effected by the side walls (6, 7), characterised thereby that the pressing-on means (9) is pressable by a settable force substantially radially towards and resiliently against the apertured drum (1), reaches over the entire belt width and has a surface shape which allows a strong bulging out of the press belt (2) in the press belt centre at the start of the pressing-on means (9), whilst this possibility of bulging out continuously decreases in direction towards the end of the pressing-on means (9).

2. Press sieving machine according to claim 1, characterised thereby that the presing-on means (9) is a per se known pressing-on shoe (10).

3. Press sieving machine according to claim 1, characterised thereby that the pressing-on means (9) is constructed as roller grate (15) and the surface shape indicated in claim 1 is obtained in that the support rollers (16) forming this have a zone (17) of smaller diameter in their centre region, wherein the length of this zone (17) is different for the individual support rollers (16) in the manner that it is smaller with increasing proximity of the support rollers (16) to the pressure roller (5) and finally the last support roller (16.4) is a cylinder roller.

4. Press sieving machine according to claim 2, characterised thereby that the pressing-on shoe (10) is executed as a shaped sheet metal part.

5. Press sieving machine according to claim 2, characterised thereby that the pressing-on shoe (10) is produced from synthetic material in a cast-moulding, draw-moulding, press-moulding or free-moulding process.

6. Press sieving machine according to one of claims 1 to 5, characterised thereby that the pressing-on means (9) are oscillatingly movable substantially perpendicularly to the press belt (2), wherein the oscillatory movement is effected by resilient support of the pressing-on means (9) on at least one eccentric roller (12), the drive of which is derived from the machine drive.

## Revendications

1. Hachoir à viande à bande de compression pour séparer des composants coulants et non coulants mélangés entre eux, par exemple pour séparer, de morceux e viande, des tendons et des cartilages, comprenant un tambour perforé (1) entraîné à rotation à surface d'enveloppe perforée, une bande de compression élastique (2) qui entoure le tambour perforé (1) sur une partie de sa périphérie, est susceptible d'être appuyée sur la surface d'enveloppe par un rouleau de compression (5) et par des moyens de tension et d'appui (9) disposés en amont de celui-ci, est guidée entre deux parois latérales (6,7) et constitue pour la matière à hacher, avec la surface d'enveloppe du tambour perforé (1), un coin d'introduction (4) dont la limitation latérale est constituée par les parois latérales (6,7), caractérisé en ce que le moyen d'appui (9) peut être appuyé élastiquement sous l'effet d'une force réglable sur le tambour perforé (1) de manière sensiblement radiale à celui-ci, s'étend sur toute la largeur de bande et présente une forme supeficielle qui permet, au début du moyen d'appui (9), un fort renflement de la bande de compression (2) au milieu de la bande de compression tandis que cette possibilité de renflement diminue de façon continue en direction de l'extrémité du moyen d'appui (9).

2. Hachoir à viande par compression selon la revendication 1, caractérisé en ce que le moyen d'appui (9) est un sabot d'appui (10) connu en soi.

3. Hachoir à viande par compression selon la revendication 1, caractérisé en ce que le moyen d'appui est réalisé sous forme de grille tournante (15) et en ce que la forme superficielle indiquée à la revendication 1 est réalisée par le fait que les rouleaux d'appui (16) qui la constituent comportent dans leur plage centrale, une zone (17) de plus petit diamètre, la longueur de cette zone (17) variant selon les rouleaux d'appui individuels (16) d'une manière telle qu'elle devient plus petite au fur et à mesure que les rouleaux d'appui (16) sont plus proches du rouleau de compression (5) et en ce que le dernier rouleau d'appui (16, 4) est finalement un rouleau cylindrique.

4. Hachoir à viande par compression selon la revendication 1, caractérisé en ce que le sabot d'appui (10) est réalisé sous forme de composant en tôle.

5. Hachoir à viande par compression selon la revendication 1, caractérisé en ce que le sabot d'appui (10) est réalisé en matière plastique, selon un procédé de moulage par coulée, par étirage, par compression ou libre.

6. Hachoir à viande par compression selon l'un des revendications 1 à 5, caractérisé en ce que les moyens d'appui (9) sont mobiles en oscillant de façon sensiblement perpendiculaire à la bande de compression (2), le mouvement d'oscillation résultant d'un appui élastique des moyens d'appui (9) sur au moins un galet excentrique (12) dont l'entraînement est dérivé de l'entraînement du hachoir.
